Europäisches Patentamt

European Patent Office

Office européen des brevets

(11) Veröffentlichungsnummer: **0 583 496 B1**

# EUROPÄISCHE PATENTSCHRIFT

(45) Veröffentlichungstag der Patentschrift: **22.11.95**

(51) Int. Cl.⁶: **G01M 15/00**, F02P 17/00

(21) Anmeldenummer: **92113917.6**

(22) Anmeldetag: **14.08.92**

(54) **Verfahren zur Erkennung von Verbrennungsaussetzern.**

(43) Veröffentlichungstag der Anmeldung:
**23.02.94 Patentblatt 94/08**

(45) Bekanntmachung des Hinweises auf die
Patenterteilung:
**22.11.95 Patentblatt 95/47**

(84) Benannte Vertragsstaaten:
**DE FR GB IT**

(56) Entgegenhaltungen:
**WO-A-92/09874**
**DE-A- 4 138 765**

**PATENT ABSTRACTS OF JAPAN vol. 16, no.
339 (M-1284)22. Juli 1992 & JP-A-04 101 071**

**PATENT ABSTRACTS OF JAPAN vol. 16, no.
365 (P-1397)6. August 1992 &JP-A-04 113 244**

(73) Patentinhaber: **SIEMENS AKTIENGESELL-
SCHAFT**
**Wittelsbacherplatz 2**
**D-80333 München (DE)**

(72) Erfinder: **Angermaier, Anton, Dipl.-Ing. (FH)**
**Renatastrasse 17**
**W-8300 Landshut (DE)**
Erfinder: **Wier, Manfred Dr. Ing.**
**Ahornweg 2**
**W-8411 Wenzenbach (DE)**
Erfinder: **Vogt, Thomas, Dipl.-Ing.**
**Hermann-Seib-Strasse 69**
**W-8400 Regensburg (DE)**

## Beschreibung

Die Erfindung betrifft ein Verfahren zur Erkennung von Verbrennungsaussetzern in Mehrzylinderbrennkraftmaschinen, bei dem die Winkelgeschwindigkeit der Kurbelwelle gemessen wird und welches auch bei Fehlern in der Messung der Winkelgeschwindigkeit eine zuverlässige Aussetzererkennung ermöglicht.

Verbrennungsaussetzer können bei Brennkraftmaschinen mit nachgeschaltetem Abgaskatalysator zur Schädigung des Katalysators führen, da durch Nachreaktionen des unverbrannten Kraftstoff-Luftgemisches im Katalysator hohe Temperaturen auftreten. Unabhängig von der Verwendung eines Katalysators wird durch Verbrennungsaussetzer die Abgasqualität verschlechtert.

Es sind verschiedene Verfahren bekannt, die zur Erkennung von Verbrennungsaussetzern die momentane Winkelgeschwindigkeit der Kurbelwelle messen. Verbrennungsaussetzer führen zu einer vorübergehenden Verlangsamung der Winkelgeschwindigkeit der Kurbelwelle. Um dies zu erkennen, werden die Zeitspannen (Segmentzeiten) gemessen, während deren sich die Kurbelwelle um eine definierte Winkelspanne dreht. Die Zeitmessung erfolgt dabei üblicherweise durch Markierungen auf der Kurbelwelle oder einer damit verbundenen Welle oder mittels eines auf diesen Wellen angebrachten Rades. Diese Markierungen oder dieses Rad werden von dazu geeigneten Sensoren abgetastet.

Die gemessenen Segmentzeiten finden nicht direkt Verwendung, sondern es werden aus ihnen sogenannte Laufunruhewerte berechnet, bei denen je nach verwendetem Verfahren verschiedene dynamische Einflüsse, die beim Betrieb der Brennkraftmaschine auftreten (Beschleunigung, Verzögerung), kompensiert werden. Ein derartiges Verfahren ist beispielsweise beschrieben in der europäischen Patentanmeldung 92111078.9 (EP-A1-576 705, veröffentlicht 5,1,94). Die Laufunruhewerte werden dann mit vorgebbaren Schwellwerten verglichen und bei Unterschreitung (sofern ein Verfahren verwandt wird, bei dem sich bei einem Verbrennungsaussetzer ein negativer Laufunruhewert ergibt) bzw. bei Überschreitung (sofern ein Verfahren verwandt wird, bei dem sich bei einem Verbrennungsaussetzer ein positiver Laufunruhewert ergibt) dieser Schwellwerte wird ein Verbrennungsaussetzer erkannt. Gegebenenfalls können dann steuernde Maßnahmen ergriffen werden, wie zum Beispiel die Abschaltung der betreffenden Einspritzdüsen.

Diese Verfahren funktionieren nur dann fehlerfrei, wenn nicht schon bei der Messung der Segmentzeiten Fehler auftreten.

Diese Fehler können beispielsweise herrühren von unterschiedlichen Segmentgrößen, Zahnformungenauigkeiten, Scheibenschlag beim Markierungsrad und Fehler in den Sensoren.

Ist zum Beispiel ein markiertes Segment größer als sein Nachbarsegment, so wird eine Verlangsamung der Kurbelwelle vorgetäuscht und es wird fälschlicherweise ein Verbrennungsaussetzer erkannt.

Eine Berücksichtigung derartiger Fehler ist grundsätzlich in Patent Abstracts of Japan der JP-A-4-101 071 angedeutet.

Aufgabe der vorliegenden Erfindung ist es daher, ein Verfahren zur Erkennung von Verbrennungsaussetzern anzugeben, das es ermöglicht, trotz Fehler bei der Messung der Segmentzeiten, eine zuverlässige Aussetzererkennung zu gewährleisten und Fehlerkennungen zu vermeiden.

Ein erfindungsgemäßes Verfahren zur Lösung dieser Aufgabe ist im Anspruch 1 angegeben. Die Unteransprüche beschreiben bevorzugte Weiterbildungen dieses Verfahrens.

Um Fehler bei der Messung der Segmentzeiten zu erkennen und zu korrigieren, wird beim erfindungsgemäßen Verfahren in Zeiten, wenn sich die Brennkraftmaschine in einem Betriebszustand befindet, der keine Verbrennungsaussetzererkennung gestattet - beispielsweise im Zustand der Schubabschaltung, wenn die Kraftstoffversorgung abgeschaltet ist -, ein Verfahren verwandt, das die gemessenen Segmentgrößen mit einem Bezugssegment vergleicht, Unterschiede erkennt und für die einzelnen Segmente Korrekturwerte berechnet. Ein solches Verfahren ist beispielsweise beschrieben in der zeitgleichen europäischen Anmeldung 92113916.8 (EP-A1-583 495, veröffentlicht 23,2,94) derselben Anmelderin.

Es werden dabei für die einzelnen den Zylindern zugeordneten Kubelwellensegmente sukzessive Korrekturwerte berechnet.

Diese werden anschließend gemittelt, beispielsweise in Form einer gleitenden Mittelung.

Eine Mittelung ist notwendig, da die systematischen Fehler der Segmente mit zufälligen Fehlern wie Toleranzen bei der Schaltgenauigkeit der Sensoren oder allgemeine Schwingungen oder Störungen vom Antriebsstrang her, überlagert sein können.

Diese zylinderindividuellen Korrekturwerte nähern sich bei wiederholter Berechnung einem Grenzwert. Theoretisch ist erst bei Erreichung dieses Grenzwertes eine vollständige Korrektur der aufgetretenen Fehler möglich. In der Praxis wird allerdings davon ausgegangen, daß bei Erreichung von beispielsweise 95% dieses Grenzwertes eine ausreichende Fehlerkorrektur erfolgt.

Um die Annäherung an den Grenzwert zu beschleunigen, kann zu Beginn der Berechnung der Korrekturwerte eine Mittelung verwandt werden, bei der die jeweils neu berechneten Werte stark mit eingehen. Bei steigender Zahl der Zyklen zur Berechnung der Korrekturwerte kann dann zu einer Mittelung übergegangen werden, in der die jeweils neu berechneten Werte nur noch schwächer mit eingehen, was den Vorteil hat, daß damit auch die zufälligen Fehler schwächer mit eingehen.

Entsprechend der Annäherung der Korrekturwerte an diesen Grenzwert werden die Schwellwerte der Laufunruhe angepaßt. Zu Beginn der Berechnung der Korrekturwerte, wenn der Korrekturwert noch stark fehlerbehaftet ist, wird, um Fehlerkennungen auszuschließen, der Schwellwert der Laufunruhe, sofern ein Verfahren verwandt wird, bei dem sich bei einem Verbrennungsaussetzer ein negativer Laufunruhewert ergibt, auf einen tiefen Wert gesetzt bzw. bei Verfahren, bei denen sich bei einem Verbrennungsaussetzer ein positiver Laufunruhewert ergibt, auf einen hohen Wert gesetzt.

Mit zunehmender Verbesserung der Genauigkeit der Korrekturwerte, wird der Schwellwert dann entsprechend angehoben bzw. abgesenkt bis auf einen Normalwert.

Diese Normalwerte sind vorteilhafterweise in Kennfeldern betriebsgrößenabhängig für den Fall einer fehlerfreien Segmentmessung abgespeichert.

Beim allerersten Motorbetrieb werden in Abhängigkeit von der oder den verwendeten Mittelungskonstanten die Anzahl der benötigten Zyklen zur Berechnung der Korrekturwerte berechnet, nach Durchlaufen derer die Korrekturverte die Fehler in der Segmentzeitmessung mit einer gewünschten Genauigkeit korrigieren (beispielsweise zu 95%).

Außerdem werden der Zykluszähler und die Korrekturwerte mit vorgebbaren Werten, vozugsweise Null initialisiert.

Die Zahl der durchgeführten Zyklen und die Zahl der benötigten Zyklen werden nichtflüchtig abgespeichert, so daß beim nächsten Betriebsbeginn der Brennkraftmaschine auf sie als Startwerte zurückgegriffen werden kann.

Ein Ausführungsbeispiel des erfindungsgemäßen Verfahrens wird im folgenden annhand der Zeichnungsfigur noch näher erläutert.

Bei dem Verfahren zur Ermittlung von Laufunruhewerten, auf das hier Bezug genommen wird, sind die berechneten Laufunruhewerte negativ, wenn ein Verbrennungsaussetzer auftritt.

Beim allerersten Betriebsbeginn der Brennkraftmaschine werden der Zykluszähler und die Korrekturwerte für die Segmente mit vorgebbaren Werten, in diesem Ausführungsbeispiel mit Null initialisiert. Bei jedem weiteren Betriebsbeginn werden die beim letzten Betrieb ermittelten und gespeicherten Werte als Startwerte verwandt.

Im Verfahrensschritt S1 wird geprüft, in welchem Betriebszustand die Brennkraftmaschine sich aktuell befindet.

Liegt der Betriebszustand der Schubabschaltung vor, d.h. ist die Kraftstoffversorgung abgeschaltet, so werden neue Korrekturwerte für die Segmente berechnet. Dazu werden im Verfahrensschritt S2 für alle Zylinder die Segmentzeiten $TG_n$ der den jeweiligen Zylindern zugeordneten Segmente gemessen. Durch Vergleich mit einem Bezugssegment werden Abweichungen der Segmentzeiten erkannt und im Verfahrensschritt S3 werden daraus, nach einem hier nicht näher beschriebenen Verfahren, Korrekturwerte $K_n$ für die einzelnen zylinderindividuell zugeordneten Segmente berechnet. Diese Korrekturwerte werden im Verfahrensschritt S4 einer Mittelung unterzogen, beispielsweise einer gleitenden Mittelung nach der Gleichung:

$$KM_n = KM_{n-1} * (1 - MITKO) + K_n * MITKO \, ,$$

wobei mit

$KM_n$      der gemittelte Korrekturwert, mit
$K_n$      der ungemittelte Korrekturwert und mit
MITKO      eine Mittelungskonstante mit einem Wertebereich zwischen
0 und 1      bezeichnet ist.

Durch die Mittelung werden zufällige Fehler eliminiert, die den systematischen Segmentfehlern überlagert sein können.

Die Mittelungskonstante MITKO kann, wie eingangs beschrieben, abhängig sein von der Zahl der bisher berechneten Korrekturwerte. Anfangs, wenn noch wenig Korrekturwerte $K_n$ berechnet sind, also wenig Zyklen durchlaufen sind, wird die Mittelungskonstante MITKO groß gewählt, beispielsweise zu 0,2. Dadurch geht der jeweils neu berechnete Korrekturwert $K_n$ stark in die Mittelwertbildung ein. Es erfolgt eine schnelle Annäherung an den Grenzwert $KG_n$, dem die gemittelten Korrekturwerte zustreben. Das System "lernt" die Segmentfehler schnell und kann sie entsprechend korrigieren. Allerdings gehen unerwünschterweise auch die zufälligen Fehler stark mit ein.

Deswegen wird später, wenn schon mehr Zyklen durchlaufen wurden, die Mittelungskonstante auf einen kleineren Wert gesetzt, beispielsweise auf 0,02.

Dieses Nachführen der Mittelungskonstante entsprechend der schon berechneten Korrekturwerte, deren Zahl durch den weiter unten beschriebenen Zykluszähler festgehalten ist, kann auch in mehreren Stufen erfolgen.

Im Verfahrensschritt S5 werden die bisherigen Korrekturwerte durch die neuen gemittelten Korrekturwerte ersetzt.

Im Verfahrensschritt S6 wird ein Zykluszähler ZZ um 1 erhöht.

Je höher der Wert des Zykluszählers, also je größer die Zahl der schon durchlaufenen Zyklen, desto besser korrigieren die berechneten Korrekturwerte den ermittelten Segmentfehler. Der Stand des Zykluszählers wird nichtflüchtig abgespeichert, so daß bei einem neuen Betriebsbeginn der Brennkraftmaschine als Startwert darauf zugegriffen werden kann.

Danach wird wieder zum Verfahrensschritt S1 zurückgegangen, in welchem der aktuelle Betriebszustand der Brennkraftmaschine festgestellt wird.

Befindet sich die Brennkraftmaschine nicht im Betriebsbereich der Schubabschaltung, so kann die Verbrennungsaussetzererkennung durchgeführt werden.

Dazu werden im Verfahrensschritt S7 die Segmentzeiten $TG_n$ der Kurbelwellensegmente gemessen und mit dem bisher berechneten Korrekturfaktoren $KM_n$ korrigiert ($TK_n$). Daraus werden im Verfahrensschritt S8 nach einem hier nicht näher beschriebenen Verfahren unter eventueller Berücksichtigung des dynamischen Motorverhaltens zylinderindividuelle Laufunruhewerte $LU_n$ ermittelt.

Diese Laufunruhewerte $LU_n$ werden im Verfahrensschritt S9 mit modifizierten Schwellwerten $MLUG_n$ verglichen.

Diese modifizierten Schwellwerte $MLUG_n$ erhält man, indem, wie im Verfahrensschritt S10 dargestellt, in Abhängigkeit von den aktuellen Betriebsgrößen der Brennkraftmaschine aus Kennfeldern Schwellwerte $LUG_n$ entnommen werden, die dort unter der Voraussetzung einer fehlerfreien Segmentzeitmessung abgespeichert sind.

Diese Schwellwerte werden dann im Verfahrensschritt S11 modifiziert nach der Gleichung:

$$MLUG_n = LUG_n - (\Delta\alpha/\alpha * TG_n * F) * (BS-ZZ)/BS,$$

wobei bezeichnetist mit:

$\Delta\alpha/\alpha$    der relative maximale Fehler, der bei der Segmentzeitmessung auftreten kann. Bei einem auf der Kurbelwelle angebrachten Zahnrad das zur Messung verwandt wird, hängt er unter anderem ab von der Fertigungstoleranz des Meßrades

$F$    ein Faktor abhängig vom verwendeten Verfahren zur Berechnung der Laufunruhewerte

$MLUG_n$    der modifizierte Schwellwert der Laufunruhe

$LUG_n$    der dem Kennfeld entnommene Schwellwert der Laufunruhe

$ZZ$    die Zahl der bisher durchlaufenen Zyklen zur Berechnung der Korrekturfaktoren

$BS$    die benötigte Zahl der Zyklen um eine Annäherung an den Grenzwert des Korrekturfaktors zu erreichen, bei dem die Segmentfehler beispielsweise zu 95% korrigiert sind. BS steht in einer proportionalen Abhängigkeit zum Kehrwert der bei der Korrekturwertberechnung verwendeten Mittelungskonstanten und berechnet sich nach der Gleichung: BS = - ln (G) / MITKO , wobei mit G der Restfehler bezeichnet ist, den die korrigierten Segmentzeiten gegenüber den fehlerfreien Segmentzeiten noch aufweisen, also hier beispielsweise 0,05.

Die Modifizierung der Schwellwerte ist also abhängig vom Wert des Zykluszählers ZZ. Hat der Zykluszähler ZZ den Anfangswert Null, so wird der Schwellwert um den Wert ($\Delta\alpha/\alpha * TG_n * F$) erniedrigt. Mit zunehmend größerem Wert des Zykluszählers ZZ nähert sich der modifizierte Schwellwert $MLUG_n$ von unten dem aus dem Kennfeld ausgelesenen Schwellwert.

Die Modifizierung wird abgebrochen, wenn ZZ = BZ. Danach finden für die Verbrennungsaussetzererkennung direkt die Schwellwerte aus den Kennfeldern Verwendung.

Ist beim Vergleich im Verfahrensschritt S9 der Laufunruhewert $LU_n$ kleiner als der modifizierte Schwellwert $MLUG_n$, so wird ein Verbrennungsaussetzer erkannt (Verfahrensschritt S12). Ist er dagegen größer oder gleich dem modifizierten Schwellwert $MLUG_n$, so wird kein Verbrennungsaussetzer registriert (Verfahrensschritt S13).

Bei einem Verfahren, bei dem sich beim Auftreten eines Verbrennungsaussetzers positive Laufunruhewerte ergeben, sind natürlich auch die Schwellwerte positiv und sie Erfahren in der Anfangsphase eine Modifizierung zu größeren Werten. Ein Verbrennungsaussetzer wird dabei erkannt, wenn diese positiven Schwellwerte überschritten werden.

Beide Fälle werden im Verfahrensschritt S14 einer statistischen Auswertung zugeführt, da bei einzelnen erkannten Verbrennungsaussetzern noch keine steuernden Maßnahmen, wie das Abschalten von Einspritzdüsen, ergriffen werden, sondern erst wenn die statistische Häufigkeit solcher Verbrennungsaussetzer eine bestimmte Grenze überschreitet.

Anschließend wird wieder zu Verfahrensschritt S1 zurückgegangen, in welchem der Betriebszustand der Brennkraftmaschine festgestellt wird.

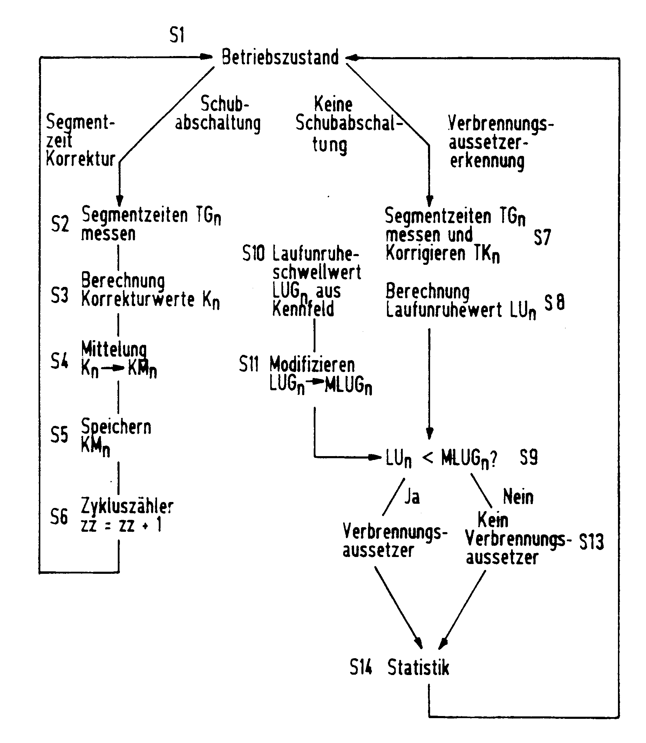

**Patentansprüche**

1. Verfahren zur Erkennung von Verbrennungs-aussetzern bei einer Mehrzylinder-Brennkraft-maschine durch Messung von Segmentzeiten ($TG_n$), die die Kurbelwelle während der Arbeitstakte der einzelnen Zylinder zum Durch-laufen vorgegebener Winkelspannen, Segmen-te benötigt, wobei

   - in Zeiten, wenn sich die Brennkraftma-schine im Betriebszustand der Schubab-schaltung befindet, d.h. wenn die Kraftstoffversorgung abgeschaltet ist,
   - die gemessenen Segmentzeiten ($TG_n$) mit der Segmentzeit ($TG_0$) eines Bezugs-segments verglichen werden, wodurch Unterschiede der einzelnen Segmentgrößen ermittelt werden und für die einzel-nen den Zylindern zugeordneten Seg-mente jeweils ein Korrekturwert ($K_n$) be-rechnet wird,
   - und daß in Zeiten, wenn sich die Brennkraftmaschine nicht im Betriebszustand der Schubabschaltung befindet
   - aus den gemessenen und korrigierten Segmentzeiten ($TK_n$) ein Laufunruhewert ($LU_n$) ermittelt wird,
   - dieser Laufunruhewert ($LU_n$) mit einem Schwellwert ($MLUG_n$) verglichen wird
   - und daß ein Verbrennungsaussetzer erkannt wird, wenn der Laufunruhewert ($LU_n$) kleiner ist als der Schwellwert ($MLUG_n$) sofern ein Verfahren Verwen-dung findet, bei welchem bei Auftreten eines Verbrennungsaussetzers die berechneten Laufunruhewerte negativ sind bzw. wenn der Laufunruhewert ($LU_n$) grö-ßer ist als der Schwellwert ($MLUG_n$) so-fern ein Verfahren Verwendung findet, bei welchem bei Auftreten eines Verbren-nungsaussetzers die berechneten Lau-funruhewerte positiv sind,
   - wobei der Schwellwert ($MLUG_n$) im an-fänglichen Betrieb der Brennkraftmaschi-ne, wenn noch keine Korrekturwerte ($K_n$) berechnet wurden, einen kleineren Wert aufweist und mit der sukzessiven Be-rechnung von Korrekturwerten ($K_n$) auf einen größeren Wert angehoben wird, sofern ein Verfahren Verwendung findet, bei welchem bei Auftreten eines Verbren-nungsaussetzers die berechneten Lau-funruhewerte negativ sind, der Schwell-wert ($MLUG_n$) anfangs einen größeren Wert aufweist und mit der sukzessiven Berechnung von Korrekturwerten ($K_n$) auf einen kleineren Wert erniedrigt wird, sofern ein Verfahren Verwendung findet, bei welchem, bei Auftreten eines Verbrennungsaussetzers, die berechneten Laufunruhewerte positiv sind.

2. Verfahren nach Anspruch 1, wobei die Verminderung bzw. Erhöhung der Schwell-werte ($MLUG_n$) der Laufunruhe linear erfolgt.

3. Verfahren nach Anspruch 2, wobei die Größe des Linearitätsfaktors abhängig ist von der Zeit, in der die sukzessive berechne-ten Korrekturfaktoren ($K_n$) sich einem Grenz-wert ($KG_n$) annähern.

4. Verfahren nach Anspruch 1, wobei die Verminderung bzw. Erhöhung der Schwell-werte der Laufunruhe ($MLUG_n$) der Funktion folgt, mit der sich die sukzessive berechneten Korrekturwerte ($K_n$) einem Grenzwert ($KG_n$) an-nähern.

5. Verfahren nach einem der vorhergehenden Ansprüche, wobei
   - die fortlaufend berechneten Korrekturwer-te ($K_n$) einer gleitenden Mittelung unter-worfen werden nach der Gleichung:

   $$KM_n = KM_{n-1} * (1\text{-MITKO}) + K_n * \text{MITKO} ,$$

   wobei mit $KM_n$ der gemittelte Korrektur-wert bezeichnet ist und mit MITKO eine Mittelungskonstante mit einem Wertebereich zwischen 0 und 1,
   - und daß die Verminderung bzw. Erhöhung der Schwellwerte der Laufunruhe sich in Abhängigkeit von der Zahl der zur Berechnung der Korrekturfaktoren durchlaufenen Zyklen (ZZ) ergibt nach der Gleichung:

   $$MLUG_n = LUG_n - (\Delta\alpha/\alpha * TG_n * F) * (BS\text{-}ZZ)/BS,$$

   wobei mit

   $\Delta\alpha/\alpha$    der relative maximale Fehler der Segmentzeitmessung

   F    ein Faktor abhängig vom ver-wendeten Verfahren zur Berech-nung der Laufunruhewerte

   $MLUG_n$    der modifizierte Schwellwert der Laufunruhe

   $LUG_n$    der den Kennfeldern entnomme-ne Schwellwert der Laufunruhe

   ZZ    die Zahl der bisher durchlaufenen Zyklen zur Berechnung der Korrekturfaktoren

   BS    benötigte Zahl der Zyklen, um die Segmentfehler mit einem wählbaren Restfehler (G) zu korrigieren, wobei sich BS berechnet nach der Gleichung: BS = - ln (G) / MITKO bezeichnet ist, und wobei eine Verminderung bzw. Erhöhung der Schwellwerte nur stattfindet solange ZZ < BS.

6. Verfahren nach einem der vorhergehenden Ansprüche, wobei
die Zahl (ZZ) der schon durchlaufenen Zyklen zur Berechnung der Korrekturfaktoren und die Zahl (BS) der benötigten Zyklen zur Korrektur des Segmentfehlers mit einem wählbaren Restfehler (G) nichtflüchtig abgespeichert werden und beim nächsten Betriebsbeginn der Brennkraftmaschine als Startwerte verwendet werden.

7. Verfahren nach einem der vorherigen Ansprüche, wobei
die fortlaufend berechneten Korrekturwerte ($K_n$) einer Mittelung unterworfen werden, wobei zu Beginn der Berechnung der Korrekturwerte ($K_n$) eine Mittelung Verwendung findet, bei der die neu berechneten Korrekturwerte ($K_n$) jeweils sehr stark mit eingehen und daß bei zunehmender Zykluszahl (ZZ) eine Mittelung Verwendung findet, bei der die jeweils neu berechneten Korrekturwerte ($K_n$) nur noch schwächer mit eingehen.

**Claims**

1. Method for detecting misfires in a multi-cylinder internal-combustion engine by the measurement of segment times ($TG_n$) which the crankshaft requires for passing through predetermined angular spans during the work cycles of the individual cylinders, in which,
   - in times when the internal-combustion engine is in the operating state of overrun cut-off, that is to say when the fuel supply is cut off,
   - the measured segment times ($TG_n$) are compared with the segment time ($TG_0$) of a reference segment, with the result that differences in the individual segment sizes are determined and a correction value ($K_n$) is calculated in each case for the individual segments assigned to the cylinders,
   - and, in times when the internal-combustion engine is not in the operating state of overrun cut-off,
   - a running-noise value ($LU_n$) is determined from the measured and corrected segment times ($TK_n$),
   - this running-noise value ($LU_n$) is compared with a threshold value ($MLUG_n$),
   - and a misfire is detected when the running-noise value ($LU_n$) is lower than the threshold value ($MLUG_n$), insofar as use is made of a method in which, when a misfire occurs, the calculated running-noise values are negative, or when the running-noise value ($LU_n$) is higher than the threshold value ($MLUG_n$), insofar as use is made of a method in which, when a misfire occurs, the calculated running-noise values are positive,
   - and in which, in the initial operation of the internal-combustion engine when correction values ($K_n$) have not yet been calculated, the threshold value ($MLUG_n$) has a lower value and, with the successive calculation of correction values ($K_n$), is raised to a higher value, insofar as use is made of a method in which, when a misfire occurs, the calculated running-noise values are negative, and the threshold value ($MLUG_n$) initially has a higher value and, with the successive calculation of correction values ($K_n$), is lowered to a lower value, insofar as use is made of a method in which, when a misfire occurs, the calculated running-noise values are positive.

2. Method according to Claim 1, in which the reduction or the increase in the threshold values ($MLUG_n$) of the running noise takes place linearly.

3. Method according to Claim 2, in which the size of the linearity factor is dependent on the time in which the successively calculated correction factors ($K_n$) approach a limit value ($KG_n$).

4. Method according to Claim 1, in which the reduction or the increase in the threshold values of the running noise ($MLUG_n$) follows the function by which the successively calculated correction values ($K_n$) approach a limit value ($KG_n$).

5. Method according to one of the preceding claims, in which
   - the continuously calculated correction values ($K_n$) are subjected to sliding averaging according to the equation:

$$KM_n = KM_{n-1} * (1\text{-}MITKO) + K_n * MITKO,$$

in which $KM_n$ denotes the averaged correction value and MITKO denotes an averaging constant with a value range of between 0 and 1,

- and in which the reduction or the increase in the threshold values of the running noise takes place in dependence on the number of cycles (ZZ) passed through in order to calculate the correction factors, according to the equation:

$$MLUG_n = LUG_n - (\Delta\alpha/\alpha * TG_n * F) * (BS-ZZ)/BS,$$

in which

|   |   |
|---|---|
| $\Delta\alpha/\alpha$ | denotes the relative maximum error in the segment-time measurement |
| F | denotes a factor dependent on the method used for calculating the running-noise values |
| $MLUG_n$ | denotes the modified threshold value of the running noise |
| $LUG_n$ | denotes the running-noise threshold value taken from the characteristic diagrams |
| ZZ | denotes the number of cycles hitherto passed through in order to calculate the correction factors |
| BS | denotes the number of cycles required to correct the segment errors with a selectable residual error (G), BS being calculated according to the equation: |

$$BS = -1n (G)/MITKO$$

and in which a reduction or an increase in the threshold values takes place only as long as ZZ < BS.

6. Method according to one of the preceding claims, in which the number (ZZ) of the cycles already passed through in order to calculate the correction factors and the number (BS) of cycles required for correcting the segment error with a selectable residual error (G) are stored in a non-volatile memory and, when the internal-combustion engine next begins to operate, are used as starting values.

7. Method according to one of the preceding claims, in which the continuously calculated correction values ($K_n$) are subjected to averaging, there being used at the beginning of the calculation of the correction values ($K_n$) an averaging which in each case incorporates to a very great extent the newly calculated correction values ($K_n$), and in which, with an increasing number of cycles (ZZ), an averaging which in each case incorporates the newly calculated correction values ($K_n$) only to a lesser extent is used.

## Revendications

1. Procédé pour détecter des ratés de combustion dans un moteur à combustion interne à plusieurs cylindres, par mesure de temps segmentaires ($TG_n$), dont le vilebrequin a besoin, pendant les cycles de travail des différents cylindres, pour parcourir des plages angulaires prédéterminées, à savoir des segments, et selon lequel

- pendant les intervalles de temps, pendant lesquels le moteur à combustion interne se trouve dans un état d'interruption de force motrice, c'est-à-dire lorsque l'alimentation en carburant est coupée,
- les temps segmentaires mesurés ($TG_n$) sont comparés au temps ($TG_0$) d'un segment de référence, ce qui permet de déterminer des différences parmi les différentes grandeurs de segments et de calculer respectivement une valeur de correction ($K_n$) pour les différents segments associés aux cylindres,
- et que pendant des intervalles de temps, pendant lesquels le moteur à combustion interne ne se trouve pas dans un état d'interruption de la force motrice,
- une valeur de marche irrégulière ($LU_n$) est déterminée à partir des temps segmentaires mesurés et corrigés ($TK_n$),
- cette valeur de fonctionnement irrégulier ($LU_n$) est comparée à une valeur de seuil ($MLUG_n$), et
- qu'un raté de combustion est détecté lorsque la valeur de fonctionnement irrégulier ($LU_n$) est inférieure à la valeur de seuil ($MLUG_n$) dans la mesure où on utilise un procédé, selon lequel, lors de l'apparition d'un raté de combustion, les valeurs calculées de fonctionnement irrégulier sont négatives, ou lorsque la valeur de fonctionnement irrégulier ($LU_n$) est supérieure à la valeur de seuil ($MLUG_n$) dans la mesure où on utilise un procédé, selon lequel, lors de l'apparition d'un raté de combustion, les valeurs calculées de fonctionnement irrégulier sont positives,
- la valeur de seuil ($MLUG_n$) ayant une valeur inférieure au début du fonctionnement du moteur à combustion interne, lorsqu'aucune valeur de correction ($K_n$) n'est encore calculée, et étant donc accrue, avec le calcul successif de valeurs de correction ($K_n$), à une valeur supérieure, dans la mesure où on utilise un procédé selon lequel, lors de l'apparition d'un raté de combustion, les valeurs calculées de fonctionnement irrégulier sont négatives, et la valeur de seuil ($MLUG_n$) ayant initialement une valeur supérieure et étant réduite, avec le calcul successif de valeurs de correction ($K_n$), à une valeur plus faible, dans la mesure où on utilise un procédé selon lequel, lors de l'apparition d'un raté de combustion, les valeurs calculées de fonctionnement irrégulier sont positives.

2. Procédé selon la revendication 1, selon lequel la réduction ou l'accroissement des valeurs de seuil ($MLUG_n$) pour le fonctionnement irrégulier s'effectue linéairement.

3. Procédé selon la revendication 2, selon lequel la valeur du facteur de linéarité dépend de l'intervalle de temps, pendant lequel les facteurs de correction ($K_n$) calculés successivement se rapprochent d'une valeur limite ($KG_n$).

4. Procédé selon la revendication 1, selon lequel la réduction ou l'accroissement des valeurs de seuil du fonctionnement irrégulier ($MLUG_n$) suit la fonction, avec laquelle les valeurs de correction ($K_n$) calculées successivement se rapprochent d'une valeur limite ($KG_n$).

5. Procédé selon l'une des revendications précédentes, selon lequel
   - les valeurs de correction ($K_n$), calculées successivement, sont soumises à une prise de moyenne glissante conformément à la relation:

$$KM_n = KM_{n-1} * (1\text{-MITKO}) + K_n * \text{MITKO},$$

   $KM_n$ désignant la valeur de correction de la moyenne et MITKO une constante de formation de moyenne se situant dans une gamme de valeurs comprises entre 0 et 1, et
   - que la réduction ou l'accroissement des valeurs de seuil du fonctionnement irrégulier est obtenu, en fonction du nombre des cycles (ZZ) parcourus pour le calcul des facteurs de correction, conformément à la relation :

$$MLUG_n = LUG_n - (\Delta\alpha/\alpha * TG_n * F) * (\text{BS-ZZ})/\text{BS},$$

avec

| | |
|---|---|
| $\Delta\alpha/\alpha$ | erreur maximale relative de la mesure de temps segmentaire |
| F | facteur dépendant du procédé utilisé pour le calcul des valeurs du fonctionnement irrégulier |
| $MLUG_n$ | valeur de seuil modifiée du fonctionnement irrégulier |
| $LUG_n$ | valeur de seuil du fonctionnement irrégulier, tirée des abaques |
| ZZ | nombre de cycles exécutés jusqu'alors pour le calcul des facteurs de correction |
| BS | nombre requis de cycles, dont les erreurs de segments doivent être corrigées, les erreurs de segment présentant une erreur résiduelle pouvant être sélectionnée (G), BS étant calculé conformément à la relation : |

$$\text{BS} = -\ln(G) / \text{MITKO}$$

   et une réduction ou un accroissement des valeurs de seuil intervenant uniquement tant que l'on a ZZ < BS.

6. Procédé selon l'une des revendications précédentes, selon lequel le nombre (ZZ) de cycles déjà exécutés pour le calcul des facteurs de correction et le nombre (BS) de cycles nécessaires pour corriger l'erreur de segment avec une erreur résiduelle (G) pouvant être sélectionnée sont mémorisés d'une manière non volatile et sont utilisés en tant que valeurs de départ lors du démarrage suivant du moteur à combustion interne.

7. Procédé selon l'une des revendications précédentes, selon lequel on forme la moyenne des valeurs de correction ($K_n$) calculées de façon continue, auquel cas on utilise au début du calcul des valeurs de correction ($K_n$) une formation de moyenne, dans laquelle les valeurs ($K_n$) de correction nouvellement calculées interviennent conjointement à un degré très élevé et que, lorsque le nombre de cycles (ZZ) augmente, on utilise une formation de moyenne, dans laquelle les valeurs de correction ($K_n$) qui sont respectivement nouvellement calculées, n'interviennent encore que plus faiblement.

S1

Betriebszustand

Segmentzeit
Korrektur

Schubabschaltung

Keine
Schubabschaltung

Verbrennungsaussetzererkennung

S2 Segmentzeiten $TG_n$
messen

S7 Segmentzeiten $TG_n$
messen und
Korrigieren $TK_n$

S3 Berechnung
Korrekturwerte $K_n$

S10 Laufunruheschwellwert
$LUG_n$ aus
Kennfeld

Berechnung
Laufunruhewert $LU_n$ S8

S4 Mittelung
$K_n \rightarrow KM_n$

S11 Modifizieren
$LUG_n \rightarrow MLUG_n$

S5 Speichern
$KM_n$

S6 Zykluszähler
$zz = zz + 1$

$LU_n < MLUG_n$? S9

Ja

Nein

Verbrennungsaussetzer

Kein
Verbrennungs- S13
aussetzer

S14 Statistik